(19) Europäisches Patentamt
European Patent Office
Office européen des brevets

(11) EP 3 257 874 A1

(12) EUROPÄISCHE PATENTANMELDUNG

(43) Veröffentlichungstag:
**20.12.2017 Patentblatt 2017/51**

(21) Anmeldenummer: **16174503.9**

(22) Anmeldetag: **15.06.2016**

(51) Int Cl.:
***C08F 8/46*** *(2006.01)* ***C08F 8/10*** *(2006.01)*
***C08F 10/10*** *(2006.01)* ***C08F 8/32*** *(2006.01)*
***C08F 8/14*** *(2006.01)* ***C08F 8/48*** *(2006.01)*
***C10L 1/192*** *(2006.01)* ***C10L 1/234*** *(2006.01)*
***C10M 145/00*** *(2006.01)* ***C10M 149/00*** *(2006.01)*
*C08F 110/10* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **BASF SE**
**67056 Ludwigshafen am Rhein (DE)**

(72) Erfinder: **Die Erfindernennung liegt noch nicht vor**

(74) Vertreter: **BASF IP Association**
**BASF SE**
**G-FLP-C006**
**67056 Ludwigshafen (DE)**

(54) **ALKENYLBERNSTEINSÄUREDERIVATE UND VERFAHREN ZU DEREN HERSTELLUNG**

(57) Die vorliegende Erfindung betrifft Alkenylbernsteinsäurederivate, Verfahren zu deren Herstellung und deren Verwendung.

EP 3 257 874 A1

**Beschreibung**

Die vorliegende Erfindung betrifft neue Alkenylbernsteinsäurederivate, Verfahren zu deren Herstellung und deren Verwendung.

Aus EP 156310 A2 ist ein Verfahren zur Herstellung von Bernsteinsäurederivaten aus Maleinsäureanhydrid und Olefinen bekannt, in dem Maleinsäureanhydrid und Olefin in einem stöchiometrischen Verhältnis von 0,2 - 3,0 bei Temperaturen zwischen 150 und 280 °C in Gegenwart eines Nebenreaktionen verhindernden Zusatzstoffes umgesetzt werden.

Als Olefine werden unter anderem Polyisobutene mit einem zahlenmittleren Molekulargewicht $M_n$ bis zu 3000 g/mol aufgeführt.

Aus DE 2702604 ist bekannt, Polyisobutene mit einem Polymerisationsgrad bis zu 100 mit Maleinsäureanhydrid zu Bernsteinsäurederivaten in stöchiometrischen oder leicht überschüssigen Mengen von Maleinsäureanhydrid umzusetzen. Dies entspricht einem Molekulargewicht des Polyisobuten von ca. 5600 g/mol.

In WO 12/072643 wird erwähnt, Polyisobutene mit einem zahlenmittleren Molekulargewicht $M_n$ bis zu 5000 g/mol mit Maleinsäureanhydrid zu Bernsteinsäurederivaten umzusetzen.

Genauere Reaktionsbedingungen werden nicht erwähnt.

Bei der analogen Anwendung der aus dem Stand der Technik, beispielsweise aus der EP 156310 A2, bekannten Reaktionsbedingungen auf Polyisobutene mit einem höheren Molekulargewicht als in diesem Stand der Technik angegeben, wird der Fachmann feststellen, daß die Umsätze der Reaktion sinken und die Ausbeuten zurückgehen.

Es bestand daher die Aufgabe der vorliegenden Erfindung, Reaktionsbedingungen zu entwickeln, mit denen Umsetzungsprodukte von Polyisobutenen auch höheren Molekulargewichts mit Maleinsäureanhydrid erhältlich sind.

Die Aufgabe wurde gelöst durch ein Verfahren zur Herstellung von Bernsteinsäurederivaten von hochmolekularem Polyisobuten, in dem man Polyisobuten (A) mit einem zahlenmittleren Molekulargewicht $M_n$ von 10.000 bis 50.000 bei Temperaturen von 180 bis 250 °C mit mindestens einer $\alpha,\beta$-ungesättigte Mono- und Dicarbonsäure oder deren Derivate (B), in einem stöchiometrischen Verhältnis von mindestens 2 Äquivalenten $\alpha,\beta$ -ungesättigte Mono- und Dicarbonsäure oder deren Derivate (B), pro reaktiver Doppelbindung im Polyisobuten (A), bevorzugt mehr als 2 Äquivalenten, besonders bevorzugt mindestens 2,5 Äquivalenten, ganz besonders bevorzugt mindestens 3 Äquivalenten, insbesondere mindestens 3,5 Äquivalenten und speziell mindestens 4 Äquivalenten $\alpha$, $\beta$-ungesättigte Mono- und Dicarbonsäure, oder deren Derivate, pro reaktiver Doppelbindung im Polyisobuten (A) für eine Dauer von mindestens 15 Minuten bis 10 Stunden und bis zu 10 bar Überdruck umsetzt.

Durch das erfindungsgemäße Verfahren sind erstmals Bernsteinsäurederivate des Polyisobuten mit einem zahlenmittleren Molekulargewicht $M_n$ von 10.000 bis 50.000 zugänglich.

Letztere sind ebenfalls Gegenstand der vorliegenden Erfindung.

Unter "Bernsteinsäurederivaten des Polyisobuten" werden dabei sowohl die Umsetzungsprodukte von Polyisobuten mit Maleinsäure und deren Derivaten im engeren Sinn verstanden, als auch im weiteren Sinne solche Produkte, die aus diesen erhalten werden oder aus der Umsetzung von Polyisobuten mit $\alpha,\beta$-ungesättigten Monocarbonsäuren oder deren Derivaten oder anderen $\alpha,\beta$-ungesättigten Dicarbonsäuren oder deren Derivaten als Maleinsäure erhältlich sind, da die Monocarbonsäuren oftmals z.B. durch Decarboxylierung aus den Dicarbonsäuren erhalten werden können.

Bei dem in das erfindungsgemäße Verfahren einsetzbare Polymer (A) handelt es sich um iso-Buten-Homopolymere oder iso-Buten enthaltende Copolymere, hier unter dem Begriff "Polyisobuten" zusammengefaßt, die wie folgt aus den jeweiligen Monomergemischen erhältlich sind:

Für den Einsatz von Isobuten oder eines Isobuten enthaltenden Monomerengemisches als zu polymerisierendem Monomer eignet sich als Isobuten-Quelle sowohl Rein-Isobuten als auch Isobuten-haltige $C_4$-Kohlenwasserstoffströme, beispielsweise $C_4$-Raffinate, insbesondere "Raffinat 1", $C_4$-Schnitte aus der Isobutan-Dehydrierung, $C_4$-Schnitte aus Steamcrackern und aus FCC-Crackern (fluid catalysed cracking), sofern sie weitgehend von darin enthaltenem 1,3-Butadien befreit sind. Ein $C_4$-Kohlenwasserstoffstrom aus einer FCC-Raffinerieeinheit ist auch als "b/b"-Strom bekannt. Weitere geeignete Isobuten-haltige $C_4$-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete $C_4$-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten $C_4$-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim anschließenden Polymerisationsverfahren verhalten sich die unverzeigten Butene im Raffinat 1 in der Regel praktisch inert und nur das Isobuten wird polymerisiert.

In einer bevorzugten Ausführungsform setzt man als Monomerquelle für die Polymerisation einen technischen

$C_4$-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und $\alpha$-Methylstyrol, $C_1$- bis $C_4$-Alkylstyrole wie 2-, 3- und 4-Methylstyrol und 4-tert.-Butylstyrol, Halogenstyrole wie 2-, 3- oder 4-Chlorstyrol sowie Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]-ethen, 1-[Tri(methoxyethoxy)silyl]propen, und 1-[Tri(meth-oxyethoxy)silyl]-2-methylpropen-2. Weiterhin kommen - abhängig von den Polymerisationsbedingungen - als Comonomere auch Isopren, 1-Buten und cis- und trans-2-Buten in Betracht.

Das Verfahren kann so ausgestaltet werden, dass bevorzugt statistische Polymere oder bevorzugt Blockcopolymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von LewisSäuren, bevorzugt Bortrifluorid- oder Aluminiumtrichlorid- oder Alkylaluminiumchloridbasierten Katalysatoren, in flüssiger Phase durchgeführt werden.

Als "reaktive Doppelbindungen" oder "Vinylidenbindungen" werden im Rahmen der vorliegenden Erfindung terminale, sogenannte $\alpha$- und $\beta$-Doppelbindungen (in Summe) verstanden. Diese zeichnen sich durch folgende Strukturelemente (hier dargestellt am Beispiel des iso-Buten Homopolymers) aus:

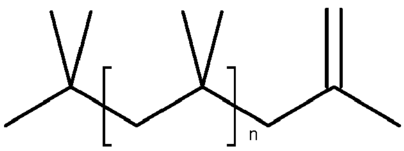

α-Doppelbindung

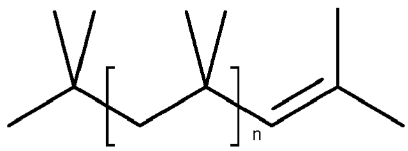

β-Doppelbindung

Der Anteil an reaktiven Doppelbindungen in den erfindungsgemäß einsetzbaren Isobutenhomo- oder -copolymeren, bezogen auf $\alpha$- und $\beta$-Doppelbindungen in Summe, kann von 30 bis 100 mol% betragen, bevorzugt 40 bis 97, besonders bevorzugt 50 bis 95, ganz besonders bevorzugt 55 bis 93 und insbesondere 60 bis 90 mol%.

Die Verteilung von $\alpha$- : $\beta$-Doppelbindungen im Polyisobuten (A) beträgt in der Regel von 90:10 bis 10:90, bevorzugt von 20:80 bis 80:20, besonders bevorzugt von 30:70 bis 70:30, ganz besonders bevorzugt von 65:35 bis 35:65 und insbesondere von 60:40 bis 40:60.

Der Anteil an $\alpha$- und $\beta$-Doppelbindungen als auch die Verteilung von $\alpha$- : $\beta$- Doppelbindungen hängt von der Herstellung der Polyisobutene (A) ab.

Der Gehalt an Doppelbindungen wird bestimmt und den jeweiligen Strukturen zugeordnet gemäß der $^1$H-NMR Methode wie beschrieben in An-Ru Guo, Xiao-Jian Yang, Peng-Fei Yan, Yi-Xian Wu, Journal of Polymer Science, Part A: Polymer Chemistry 2013, 51, 4200-4212, dort besonders Seite 4205 und Fig. 5 auf Seite 4206.

Die Vinylidengruppen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt.

Häufig reagieren unter den Vinylidengruppen die $\alpha$-Doppelbindungen schneller und bereitwilliger als die $\beta$-Doppelbindungen, so daß im Reaktionsgemisch im Verlauf der Reaktion die Reaktionsprodukte der Umsetzung der $\alpha$-Doppelbindungen zunächst in höherem Maße gebildet werden als die der $\beta$-Doppelbindungen. Dies kann dazu führen, daß zur Umsetzung der $\beta$-Doppelbindungen schärfere Reaktionsbedingungen erforderlich sind als zur Umsetzung der $\alpha$-Doppelbindungen.

Das zahlenmittlere Molekulargewicht $M_n$ der in das erfindungsgemäße Verfahren einsetzbaren Polyisobutene beträgt von 10.000 bis 50.000.

Mit Vorteil können Polyisobutene mit einem Molekulargewicht $M_n$ von mindestens 12.000, besonders bevorzugt von mindestens 15.000, ganz besonders bevorzugt von mindestens 17.000 und insbesondere von mindestens 20.000 g/mol eingesetzt werden.

Das Molekulargewicht $M_n$ der Polyisobutene kann bevorzugt bis zu 48.000, besonders bevorzugt bis zu 45.000, ganz besonders bevorzugt bis zu 40.000 und insbesondere bis zu 35.000 g/mol betragen.

Die Polydispersität $M_w/M_n$ kann von 1,05 bis 10, vorzugsweise von 1,1 bis 8, besonders bevorzugt von 1,2 bis 7, ganz besonders bevorzugt von 1,3 bis 6 und insbesondere bevorzugt von 1,4 bis 5 betragen.

Das gewichtsmittlere Molekulargewicht $M_w$ kann aus diesen Daten für $M_n$ und Polydispersität errechnet werden.

Als Reaktionspartner für das Polyisobuten (A) dienen gemäß der vorliegenden Erfindung $\alpha,\beta$-ungesättigte Mono- und Dicarbonsäuren sowie deren Derivate (B), bevorzugt $\alpha,\beta$-ungesättigte Dicarbonsäuren, sowie deren Derivate.

Unter Derivaten werden dabei verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester, sowie
- gemischte Ester, bevorzugt gemischte Ester mit unterschiedlichen $C_1$-$C_4$-Alkylkomponenten, besonders bevorzugt gemischte Methylethylester.

Bevorzugt handelt es sich bei den Derivaten um Anhydride in monomerer Form oder Di-$C_1$-$C_4$-alkylester, besonders bevorzugt um Anhydride in monomerer Form.

Unter $C_1$-$C_4$-Alkyl wird im Rahmen dieser Schrift Methyl, Ethyl, *iso*-Propyl, n-Propyl, n-Butyl, *iso*-Butyl, *sek*-Butyl und *tert*-Butyl verstanden, bevorzugt Methyl und Ethyl, besonders bevorzugt Methyl.

Bei der $\alpha,\beta$-ethylenisch ungesättigten Mono- oder Dicarbonsäure handelt es sich um solche Mono- oder Dicarbonsäuren bzw. deren Derivate, bei denen die Carboxylgruppe oder im Fall von Dicarbonsäuren mindestens eine Carboxylgruppe, bevorzugt beide Carboxylgruppen mit der ethylenisch ungesättigten Doppelbindung konjugiert sind.

Beispiele für ethylenisch ungesättigte Mono- oder Dicarbonsäure, die nicht $\alpha,\beta$-ethylenisch ungesättigt sind, sind cis-5-Norbornen-endo-2,3-dicarbonsäureanhydrid, exo-3,6-Epoxy-1,2,3,6-tetrahydrophthalsäureanhydrid und cis-4-Cyclohexen-1,2-dicarbonsäure anhydrid.

Beispiele für $\alpha,\beta$-ethylenisch ungesättigten Monocarbonsäuren als Komponente (B) sind Acrylsäure, Methacrylsäure, Crotonsäure und Ethylacrylsäure, bevorzugt Acrylsäure und Methacrylsäure, in dieser Schrift kurz als (Meth)acrylsäure bezeichnet, und besonders bevorzugt Acrylsäure.

Besonders bevorzugte Derivate von $\alpha,\beta$-ethylenisch ungesättigten Monocarbonsäuren sind Acrylsäuremethylester, Acrylsäureethylester, Acrylsäure-n-butylester und Methacrylsäuremethylester.

Beispiele für Dicarbonsäuren (B) sind Maleinsäure, Fumarsäure, Itaconsäure (2-Methylenbutandisäure), Citraconsäure (2-Methylmaleinsäure), Glutaconsäure (Pent-2-en-1,5-dicarbonsäure), 2,3-Dimethylmaleinsäure, 2-Methylfumarsäure, 2,3-Dimethylfumarsäure, Methylenmalonsäure und Tetrahydrophthalsäure, bevorzugt um Maleinsäure und Fumarsäure und besonders bevorzugt um Maleinsäure und deren Derivate.

Insbesondere handelt es sich bei dem Reaktionspartner (B) um Maleinsäureanhydrid.

Das molare Verhältnis von Komponente (B) zu reaktiver Doppelbindung im Polyisobuten (A) beträgt erfindungsgemäß mindestens 2 : 1, besonders bevorzugt mindestens 2,5 : 1, ganz besonders bevorzugt mindestens 3 : 1, insbesondere mindestens 3,5 : 1 und speziell mindestens 4 : 1.

In der Regel ist bringt ein molares Verhältnis von Komponente (B) zu reaktiver Doppelbindung im Polyisobuten (A) von mehr als 30 : 1 keinen Vorteil, bevorzugt beträgt es bis zu 25 : 1, besonders bevorzugt bis zu 20 : 1 und ganz besonders bevorzugt bis zu 18: 1.

Ein Überschuß an Komponente (B) kann in der Regel leicht destillativ bzw. per Sublimation abgetrennt werden. Die so wiedergewonnene überschüssige Komponente (B) kann dann in einer weiteren Reaktion nochmals eingesetzt werden.

Die erfindungsgemäße Reaktion wird in der Regel bei einer Temperatur von 180 bis 250 °C durchgeführt, bevorzugt 190 bis 240 und besonders bevorzugt von 200 bis 230 °C.

Da Maleinsäureanhydrid als Komponente (B) bei ca. 202 °C siedet, wird die Reaktion bei Temperaturen oberhalb von 200 °C, bevorzugt oberhalb von 190 °C und besonders bevorzugt bereits bei Temperaturen oberhalb von 180 °C zumindest unter Eigendruck, bevorzugt unter leichtem Überdruck durchgeführt.

Dieser Druck sollte mindestens 100 mbar, bevorzugt mindestens 200 mbar, besonders bevorzugt mindestens 500 mbar und insbesondere mindestens 1 bar betragen.

In der Regel sind bis zu 10 bar Überdruck ausreichend, bevorzugt bis zu 8 bar, besonders bevorzugt bis zu 7 bar und ganz besonders bevorzugt bis zu 5 bar.

Bevorzugt führt man die Reaktion unter einer Inertatmosphäre durch, besonders bevorzugt wird Stickstoff- oder Kohlendioxidatmosphäre verwendet.

Die Dauer der erfindungsgemäßen Reaktion sollte je nach Temperatur mindestens 15 Minuten betragen, bevorzugt mindestens 30, besonders bevorzugt mindestens 45 und ganz besonders bevorzugt mindestens 60 Minuten. Insbesondere sollte die Reaktionsdauer mindestens 2 Stunden betragen.

In der Regel und je nach Temperatur sollte die Reaktion innerhalb von 10 Stunden abgeschlossen sein, bevorzugt innerhalb von 8 und besonders bevorzugt innerhalb von 7 Stunden.

Es stellt eine mögliche Ausführungsform der vorliegenden Erfindung dar, die Reaktion ohne weiteres Lösungsmittel durchzuführen. Dies ist dann bevorzugt, wenn ein hoher Überschuß an Komponente (B) eingesetzt wird und die Reaktion in der Schmelze der flüssigen oder aufgeschmolzenen Komponente (B) durchgeführt werden kann.

In einer bevorzugten Ausführungsform wird die Reaktion jedoch in einem Lösungsmittel durchgeführt, das natürlich bevorzugt unter den Reaktionsbedingungen keine wesentliche Reaktion mit dem Polyisobuten und/oder der Komponente (B) zeigen soll. Bevorzugt handelt es sich bei dem Lösungsmittel um Kohlenwasserstoffe oder Kohlenwasserstoffgemische, Carbonsäureester, Ether oder Ketone, besonders bevorzugt um Kohlenwasserstoffe oder Kohlenwasserstoffgemische.

Als aromatische Kohlenwasserstoffgemische sind solche bevorzugt, die überwiegend aromatische $C_7$- bis $C_{14}$-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend $C_9$ und $C_{10}$-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

In einer bevorzugten Ausführungsform weist das eingestzte Lösungsmittel einen Siedepunkt bei Normaldruck von mindestens 140 °C auf.

Es stellt eine bevorzugte Ausführungsform der vorliegenden Erfindung dar, die Reaktion in einem Reaktor auszuführen, dessen Reaktionsvolumen zu mindestens 50% durch das flüssige Reaktionsgemisch ausgefüllt ist, bevorzugt zu mindestens 60%, besonders bevorzugt zu mindestens 66%, ganz besonders bevorzugt zu mindestens 75%, insbesondere zu mindestens 90% und speziell vollständig.

Dies hat den Vorteil, daß bei der Reaktionstemperatur der Reaktionspartner Maleinsäureanhydrid im flüssigen Reaktionsgemisch verbleibt und nur zu einem geringen Anteil in die Gasphase ausweichen kann, so daß die Verfügbarkeit an Komponente (B) im Reaktionsgemisch erhöht wird.

In einer weiteren bevorzugten Ausführungsform ist der besagte Reaktor rückvermischungsarm oder rückvermischungsfrei. Diese Fördercharakteristik ist durch eine Bodensteinzahl von mindestens 3, bevorzugt mindestens 5,

besonders bevorzugt mindestens 7 gekennzeichnet.

Bevorzugte Ausführungsformen derartiger Apparate sind Schaufeltrockner mit oder bevorzugt ohne Kühlzone, optional mit Zwangsaustragsorganen.

Solche erfindungsgemäß einsetzbaren Schaufeltrockner weisen bevorzugt keine Trennung in Heiz- und Kühlzone auf, um nicht eine sprunghafte Absenkung der Temperatur zu bewirken. Stattdessen steigt die Temperatur des Rückstandes im Verlauf des Durchgangs des Rückstandes durch den Apparat an, bevorzugt um einen Temperaturgradienten, der sich im Verlauf des Durchgangs des Rückstandes durch den Apparat um nicht mehr als 50 °C verändert, und besonders bevorzugt keine wesentliche Temperaturänderung im Verlauf des Durchgangs des Rückstandes durch den Apparat, d.h. weniger als 20 und insbesondere weniger als 10 °C.

Derartige Schaufeltrockner sind im wesentlichen horizontal aufgebaut, die Förderung des Rückstandes erfolgt in der Regel über ein- oder zwei Misch- und Knetwellen im Inneren des Apparates. In der Fachliteratur werden diese Apparate auch als Partikelbettreaktor, Knettrockner oder Knetreaktor bezeichnet.

Bevorzugt ist, dass der Schaufeltrockner eine Zwangsförderung in axialer Richtung aufweist. Die Zwangsförderung wird beispielsweise durch eine Schrägstellung der Oberflächen der Förderelemente erreicht.

Der axiale Transport durch den Apparat kann bevorzugt durch Anordnung von Förder-, Knet- und/oder Mischelementen, beispielsweise Scheibenelementen, Wellen, Schnecken, Blättern, Wischern oder Rotoren erfolgen.

Bevorzugt wird zur Einengung der Verweilzeitverteilung im Schaufeltrockner der produktführende Innenraum mit blendenartigen Scheiben in verschiedene Segmente getrennt. Besonders bevorzugt werden mindestens zwei Scheiben eingesetzt.

Die Beheizung erfolgt über die Wand und kann in beliebiger Art und Weise erfolgen. Bevorzugt erfolgt die Beheizung nicht nur über die Aussenwandung des Apparates, sondern auch über die Einbauten wie Reinigungshaken, Segmentierscheiben, und Knetwelle.

Die thermische Energie, die über die Wandungen in den Reaktorinhalt eingetragen wird, beträgt üblicherweise mehr als 120 kJ/kg Reaktorinhalt und weniger als 2400 kJ/kg Reaktorinhalt, bevorzugt mehr als 220 kJ/kg Reaktorinhalt und weniger als 1800 kJ/kg Reaktorinhalt, besonders bevorzugt mehr als 300 kJ/kg Reaktorinhalt und weniger als 1400 kJ/kg Reaktorinhalt und ganz besonders bevorzugt mehr als 360 kJ/kg Rückstand und weniger als 900 kJ/kg Reaktorinhalt.

Die Aufheizstrecke des auf den Schaufeltrockner aufgegebenen Reaktionsgemisches beträgt bevorzugt mehr als 10 % und weniger als 70 % der gesamten Länge des Schaufeltrockners, bevorzugt mehr als 20 % und weniger als 60 %, besonders bevorzugt mehr als 30 % und weniger als 50 % der gesamten Länge des Schaufeltrockners.

Im Apparat ist in der Regel ein mechanischer Energieeintrag von 5 W/kg oder mehr ausreichend, bevorzugt 10 oder mehr W/kg, besonders bevorzugt 20 oder mehr, ganz besonders bevorzugt 40 oder mehr, insbesondere 80 oder mehr und speziell 100 W/kg oder mehr. In der Regel bringt ein Energieeintrag von mehr als 200 W/kg keine Vorteile. Der angegebene spezifische Leistungseintrag ist hier als eingetragene Leistung pro Menge an Reaktionsgemisch im Apparat.

Weiterhin ist vorteilhaft, dass der Schaufeltrockner eine Zwangsreinigung der inneren, produktberührten Oberflächen von mindestens 50 %, bevorzugt mindestens 60 %, ganz besonders bevorzugt von mindestens 70 % und im speziellen mindestens 80 % dieser inneren, produktberührten Oberflächen aufweist. Die Zwangsreinigung wird die Nähe der Förderelemente zur Aussenwandung bzw. durch die Nähe von Reinigungshaken zu den Förderelementen gewährleistet.

Derartige Apparate werden beispielsweise von der Firma List AG, Arisdorf, Schweiz, unter den Handelsnamen Discotherm® B oder List-CRP bzw. AP, sowie von der Firma Buss-SMS-Canzler GmbH, Butzbach, Deutschland unter den Namen Reasol® oder Reactotherm® angeboten.

Optional können Austragsorgane für den Zwangsaustrag des Reaktionsaustrages vorhanden sein, beispielsweise Schnecken, bevorzugt Doppelschnecken.

Zumeist reichen jedoch die mechanischen Födereinrichtungen des Apparates aus, um das Reaktionsgemisch aus dem Apparat auszutragen.

Optional können dem Reaktionsgemisch Stabilisatoren zur Unterbindung von Nebenreaktionen zugesetzt werden, bevorzugt solche wie beschrieben in EP 156310 A2.

Bei diesen Zusatzstoffen handelt es sich um Alkoxide, bevorzugt die $C_2$- bis $C_4$-Alkoxide, des Titans, Zirkons, Vanadins oder Aluminiums. Derartige Verbindungen sind an sich bekannt und verfügbar. Insbesondere geeignete Alkoxide sind die Verbindungen: Titan(IV)butoxid = $Ti(C_4H_9O)_4$, Titan(IV)i-butoxid = $Ti[(CH_3)_2CHCH_2O]_4$, Titan(IV)ethoxid = $Ti(C_2H_5O)_4$, Titan(IV)i-propoxid = $Ti(OC_3H_7)_4$, Titan(IV)n-propoxid = $Ti(C_3H_7O)4$, Zirkon n-butoxid-Butanolkomplex = $(C_4H_9O)_4Zr{\cdot}C_4H_9OH$, Zirkon-i-propoxid = $Zr(OC_3H_7)$ = $C_3H_7OH$, Zirkon-n-propoxid = $Zr(OC_3H_7)_4$, Vanadin(V)tri-n-butoxid-oxid = $VO(OC_4H_9)_3$, Vanadin(V)triethoxid-oxid = $VO(OC_2H_5)_3$, Vanadin(V)tri-i-propoxidoxid = $VO(OC_3H_7)_3$, Vanadin(V)tris-n-propoxid-oxid = $VO(OC_3H_7)_3$, Aluminium-i-butoxid = $Al(OC_4H_9)_3$, Aluminium-n-butoxid = $Al(OC_4H_9)_3$, Aluminium-s-butoxid = $Al(OC_4H_9)_3$, Aluminium-t-butoxid = $Al(OC_4H_9)_3$ oder Aluminium-i-propoxid = $Al(OC_3R_7)_3$.

Die erwähnten Alkoxide liegen in flüssigem Zustand, gegebenenfalls als Komplexverbindung mit dem entsprechenden Alkohol, vor und werden in dieser Form bei der erfindungsgemäßen Reaktion verwendet. Sie werden mit einem Reinheitsgrad von 95 bis 99 Gew.%, bei den Alkoxiden des Aluminiums von 90 bis 99 Gew.%, eingesetzt. Die zu verwendenden Alkoxide sind in der Reaktionsmischung löslich.

Die Stabilisatoren werden in Mengen von 1 bis 5000, bevorzugt 5 bis 1000 Gew.-ppm, besonders bevorzugt 10 bis 500 Gew.ppm, ganz besonders bevorzugt 25 bis 300 Gew.ppm bezogen auf das eingesetzte Olefin eingesetzt.

In einer bevorzugten Ausführungsform werden in dem erfindungsgemäßen Verfahren keine weiteren Stabilisatoren eingesetzt.

Bei der hier exemplarisch gezeigten Umsetzung von Polyisobuten Homopolymer mit Maleinsäureanhydrid können sich, insbesondere bei höheren Molverhältnissen von Maleinsäureanhydrid zu Polyisobuten, als Folgeprodukte Verbindungen bilden, die mehr als eine Bernsteinsäureanhydridgruppe pro Polymer tragen. Diese Produkte haben ausgehend von α- bzw. β-Doppelbindungen unterschiedliche Strukturen:

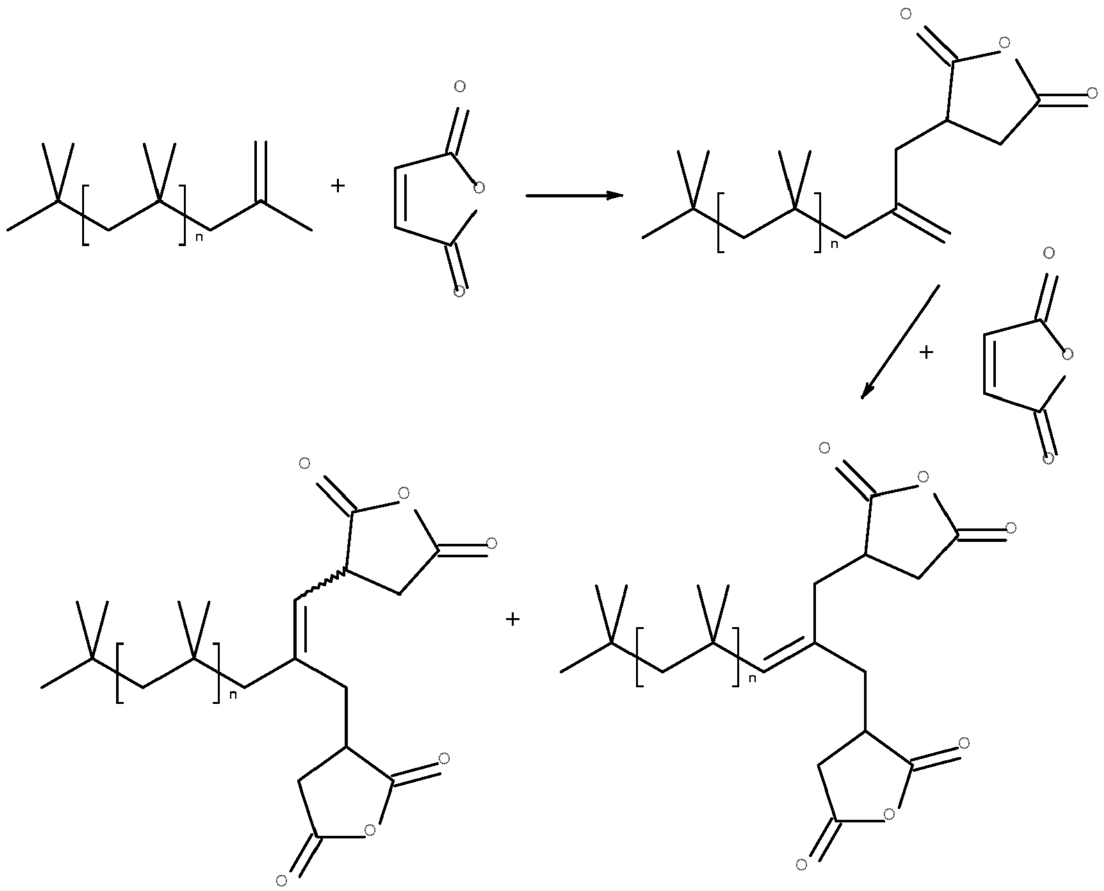

Bzw.

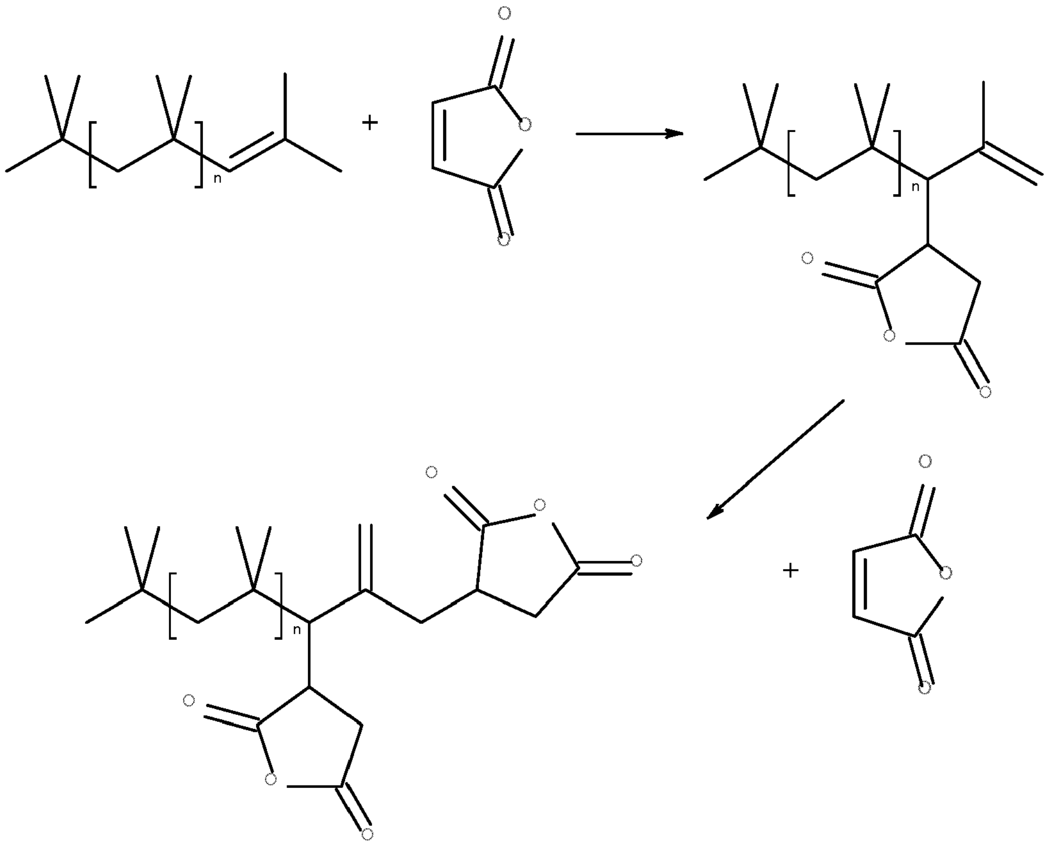

In diesen Reaktionsschemata steht n für eine natürliche Zahl von 176 bis 890, bevorzugt von 214 bis 855, besonders bevorzugt von 265 bis 801, ganz besonders bevorzugt von 301 bis 712 und insbesondere von 355 bis 623.

Gegenstand der vorliegenden Erfindung sind demzufolge auch Reaktionsgemische, erhältlich durch Umsetzung von Polyisobuten-Homopolymer oder iso-Buten enthaltende Copolymere mit Maleinsäureanhydrid, die mindestens eines der in den beiden obigen Reaktionsschemata gezeigten, mindestens eine Bernsteinsäureanhydridgruppetragende Produkte enthält.

Das Verhältnis der höher zu den einfach maleinierten Komponenten zueinander kann durch den "Bismaleinierungsgrad" (BMG) angegeben werden. Der BMG ist an sich bekannt (Siehe auch US 5,883,196) und kann nach folgender Formel bestimmt werden:

$$BMG = 100\% \times [(wt\text{-}\%(BM\ PIBSA)/(wt\text{-}\%(BM\ PIBSA)+wt\text{-}\%(PIBSA))]$$

wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

Berechnet wird der Bismaleinierungsgrad bevorzugt aus der Verseifungszahl gemäß DIN 53401: 1988-06 der Probe. Dabei muß die Probe gegebenenfalls mit einem geeigneten Lösungsmittel solubilisiert werden, bevorzugt in einem 2:1 Gemisch aus Toluol und Ethanol.

Dabei ist zu beachten, daß lediglich das Verhältnis der höher maleinierten Komponenten zu den einfach maleinierten Komponenten einbezogen wird, wohingegen im Reaktionsgemisch befindliches unumgesetztes Polyisobuten, beispielsweise solches, das keine reaktiven Doppelbindungen enthält, nicht in die Bestimmung des Bismaleinierungsgrades eingeht. Mithin kann das Reaktionsgemisch auch noch unumgesetztes Polyisobuten enthalten, was meist dem Anteil im eingesetzten Polyisobuten entspricht, der keine reaktiven Doppelbindungen enthält, wohingegen der reaktive Doppelbindungen enthaltende Anteil im Polyisobuten bevorzugt vollständig oder nahezu vollständig abreagiert.

Der Anteil an im Reaktionsgemisch befindlichen, unumgesetztem Polyisobuten entspricht daher in der Regel dem oben angegebenen bis zu 100 fehlenden Anteil an reaktiven Doppelbindungen in den erfindungsgemäß einsetzbaren Isobutenhomo- oder -copolymeren.

Zur Bestimmung des Anteils an maleinierten Komponenten im Verhältnis zum unumgesetzten Polyisobuten

wird das Reaktionsgemisch in n-Heptan gelöst und auf eine Säule mit Kieselgel 60 aufgebracht und mit n-Heptan eluiert, bis kein Produkt mehr im Eluat auftritt. Mit Hilfe einer Säulenchromatographie wird das unumgesetzten Polyisobuten von den maleinierten Komponenten getrennt, da die maleinierten Komponenten nicht eluiert werden. Nach Abtrennung des Lösungsmittels durch Destillation wird durch Abwiegen der Gewichtsanteil an maleinierten Komponenten im Reaktionsgemisch bestimmt.

Die obige Formel kann analog auch auf andere Komponenten (B) als Maleinsäureanhydrid angewendet werden und wird hier auch für andere Komponenten (B) als Maleinsäureanhydrid einfachheitshalber ebenfalls als Bismaleinierungsgrad bezeichnet.

Unter den Reaktionsbedingungen des erfindungsgemäßen Verfahren werden Bismaleinierungsgrade bis zu 20 %, bevorzugt bis zu 15% oder weniger, wie z.B. 14, 13, 12, oder 10%; oder 10% oder weniger, wie z.B. 2 bis 9, 3 bis 8, 4 bis 7, 5 oder 6 % erhalten.

Der Bismaleinierungsgrad beträgt jedoch in der Regel zumindest 1%, bevorzugt 2 bis 9, 3 bis 8 oder 4 bis 7%.

Die erfindungsgemäßen Produkte finden Verwendung zur Herstellung von Korrosionsschutzmitteln oder Mineralölhilfsmitteln, beispielsweise indem man sie mit Polyaminen, bevorzugt Ethylendiamin, Diethylentriamin, Triethylentetramin, Tetraethylenpentamin oder 3-(N',N'-Dimethylamino) propan-1-amin zu den betreffenden Amiden oder Imiden oder deren Gemischen umsetzt. Weiterhin können die Produkte mit Alkoholen umgesetzt werden.

Von besonderem Interesse sind hierbei Derivate mit Alkoholen wie Methanol, Ethanol, n-Propanol, Isopropanol, n-Butanol, Isobutanol, sec.-Butanol, tert.Butanol oder Polyethern, die durch Oxalkylierung der genannten niedermolekularen Alkanole mit $C_2$-bis $C_4$-Alkylenoxiden hergestellt worden sind. Ferner sind Aminoalkanole zu erwähnen, beispielsweise Dimethylaminoethanol, Dimethylaminopropanol, oder Hydroxyethylmorpholin.

Ferner ist es dabei möglich, freie, besonders tertiäre Aminogruppen in diesen aus Bernsteinsäureanhydrid abgeleitete Gruppierungen zu quaternisieren, insbesondere mit einem Epoxid, bevorzugt Propylenoxid oder Styroloxid, besonders bevorzugt Propylenoxid, insbesondere in Abwesenheit von freier Säure, oder mit Dimethylcarbonat.

Demgemäß ist ein weiterer Gegenstand der vorliegenden Erfindung die Verwendung der erfindungsgemäßen Bernsteinsäurederivate oder deren Umsetzungprodukte mit Polyaminen, Alkoholen oder Alkanolaminen als Kraft- und Schmierstoffadditive.

Die nachfolgenden Beispiele sollen die vorliegende Erfindung erläutern, ohne sie zu beschränken.

Beispiele

**Beispiel 1:** Maleinierung von Oppanol B10 im Druckkessel

Hochmolekulares Polyisobuten Oppanol® B10 der BASF SE, Ludwigshafen, mit einem Molgewicht Mn von ca. 17.000 und einem Gehalt an Doppelbindungen von 40% $\alpha$- und 47% $\beta$-Doppelbindungen und Maleinsäureanhydrid (Molverhältnis Maleinsäureanhydrid : Polyisobuten = 15:1, 5:1 oder 2:1 (bezogen auf die Summe von $\alpha$- und $\beta$- Doppelbindungen)) wurden in einem Druckkessel vorgelegt. Die Reaktionsmischung wurde 7 Stunden unter Stickstoff bei 240 °C gerührt. Anschließend wurde den Kessel auf 200 °C abgekühlt und langsam Xylol hinzugegeben. Die Lösung mit einem Feststoffgehalt von etwa 70% wurde bei 120 °C aus dem Kessel ausgetragen, mit Heptan auf 50 % verdünnt, abfiltriert und bei 205 °C unter Vakuum abdestilliert. Die Tabelle fasst die Ausbeute je nach Maleinsäureanhydrid : Polyisobuten-Verhältnis zusammen.

| Maleinsäureanhydrid : Polyisobuten | Ausbeute (%) | Verseifungszahl (mg KOH/g) | Anteil maleinierte Komponenten |
|---|---|---|---|
| 15:1 | 59 | 13 | n.b. |
| 5:1 | 47 | 6 | 47% |
| 2:1 | 28 | 2 | n.b. |

**Beispiel 2:** Maleinierung von Oppanol B12 im Druckkessel

Die im Beispiel 1 beschriebene Fahrweise wurde auch für das Polyisobuten Oppanol® B12 der BASF SE, Ludwigshafen, mit einem Molgewicht Mn von ca. 22.000 und einem Gehalt an Doppelbindungen von 40% $\alpha$- und 40% $\beta$-Doppelbindungen angewendet. Das Verhältnis Maleinsäureanhydrid : Polyisobuten betrug 5:1. Der Festoffgehalt in der Xylol Lösung war 60%, die Ausbeute betrug 40%. Der Anteil maleinierten Komponenten betrug 40%.

**Beispiel 3:** Maleinierung von Oppanol B10 im Druckkessel mit Maleinsäureanhydrid : Polyisobuten = 0,95:1 (Bedingungen aus EP156310), Vergleich

Die im Beispiel 1 beschriebene Fahrweise wurde für Oppanol B10 angewendet, allerdings mit einem Maleinsäureanhydrid : Polyisobuten = 0,95:1 Verhältnis. Die Ausbeute betrug lediglich 17%.

**Beispiel 4:** Maleinierung von Oppanol B15 im Kneter.

Das Polyisobuten Oppanol® B15 der BASF SE, Ludwigshafen, mit einem Molgewicht Mn von ca. 37.000 und einem Gehalt an α- und β-Doppelbindungen (in Summe) von 75% wurde in einen Kneter eingefüllt und mit Stickstoff überlagert. Maleinsäureanhydrid wurde zugegeben (Verhältnis Maleinsäureanhydrid : Polyisobuten = 15:1) und die Mischung erst bei Raumtemperatur 5 min geknetet. Der Kneter wurde auf 240 °C aufgeheizt und die Mischung bei 240 °C 60 min geknetet. Anschließend wurde Vakuum unter leichten Stickstoffstrom langsam angelegt und schrittweise erhöht; die Mischung wurde unter Vakuum 15 min gehalten. Anschließend wurde der Kneter auf 190 °C abgekühlt und das Produkt ausgetragen. Die Ausbeute war 35%.
Der Restgehalt an Maleinsäureanhydrid konnte unter diesen Bedingungen auf weniger als 0,005 g/100g Produkt gesenkt werden.

Temperatur, Reaktionsdauer und Verhältnis der Edukte wurde weiterhin variiert wie in der folgenden Tabelle angegeben:

| Temperatur (°C) | Verweilzeit (min) | Maleinsäureanhydrid : Polyisobuten | Umsatz (%) |
|---|---|---|---|
| 150 | 60 | 15:1 | 3 |
| 200 | 15 | 15:1 | 8 |
| 200 | 60 | 15:1 | 15 |
| 200 | 60 | 5:1 | 7 |
| 200 | 60 | 30:1 | 21 |
| 200 | 120 | 30:1 | 26 |
| 240 | 60 | 15:1 | 32 |
| 240 | 60 | 30:1 | 34 |
| 240 | 120 | 30:1 | 33 |
| 260 | 60 | 30:1 | 34 |

Der Anteil an maleinierten Komponenten wurde in Eintrag 7 (240 °C, 60 min, 15:1) bestimmt und betrug 25 bis 30%.

**Patentansprüche**

1. Verfahren zur Herstellung von Bernsteinsäurederivaten von hochmolekularem Polyisobuten, **dadurch gekennzeichnet, daß** man Polyisobuten (A) mit einem zahlenmittleren Molekulargewicht $M_n$ von 10.000 bis 50.000 bei Temperaturen von 180 bis 250 °C mit mindestens einer α,β-ungesättigte Mono- und Dicarbonsäure oder deren Derivate (B), in einem stöchiometrischen Verhältnis von mindestens 2 Äquivalenten α,β-ungesättigte Mono- und Dicarbonsäure oder deren Derivate (B), pro reaktiver Doppelbindung im Polyisobuten (A) für eine Dauer von mindestens 15 Minuten bis 10 Stunden und bis zu 10 bar Überdruck umsetzt.

2. Verfahren gemäß Anspruch 1, **dadurch gekennzeichnet, daß** es sich bei dem Polyisobuten (A) um ein Isobuten-Homopolymer handelt.

3. Verfahren gemäß Anspruch 1, **dadurch gekennzeichnet, daß** es sich bei dem Polyisobuten (A) um Copolymer handelt, erhältlich durch Polymerisation von Isobuten-haltigen $C_4$-Kohlenwasserstoffströmen.

4. Verfahren gemäß einem der vorstehenden Ansprüche, **dadurch gekennzeichnet, daß** der Anteil an terminalen α-

und β-Doppelbindungen im Polyisobuten (A) 30 bis 100 mol% beträgt.

5. Verfahren gemäß einem der vorstehenden Ansprüche, **dadurch gekennzeichnet, daß** es sich bei Komponente (B) um eine α,β-ethylenisch ungesättigte Monocarbonsäure oder deren Derivate handelt, ausgewählt aus der Gruppe bestehend aus Acrylsäure, Methacrylsäure, Crotonsäure und Ethylacrylsäure und deren Derivaten.

6. Verfahren gemäß einem der Ansprüche 1 bis 4, **dadurch gekennzeichnet, daß** es sich bei Komponente (B) um eine α,β-ethylenisch ungesättigte Dicarbonsäure oder deren Derivate handelt, ausgewählt aus der Gruppe bestehend ausMaleinsäure, Fumarsäure, Itaconsäure (2-Methylenbutandisäure), Citraconsäure (2-Methylmaleinsäure), Glutaconsäure (Pent-2-en-1,5-dicarbonsäure), 2,3-Dimethylmaleinsäure, 2-Methylfumarsäure, 2,3-Dimethylfumarsäure, Methylenmalonsäure und Tetrahydrophthalsäure.

7. Verfahren gemäß einem der Ansprüche 1 bis 4, **dadurch gekennzeichnet, daß** es sich bei Komponente (B) um Maleinsäureanhydrid handelt.

8. Verfahren gemäß einem der vorstehenden Ansprüche, **dadurch gekennzeichnet, daß** das molare Verhältnis von Komponente (B) zu reaktiver Doppelbindung im Polyisobuten (A) von 3 : 1 bis 30 : 1 beträgt.

9. Verfahren gemäß einem der vorstehenden Ansprüche, **dadurch gekennzeichnet, daß** die Reaktionstemperatur 190 bis 240 °C beträgt.

10. Verfahren gemäß einem der vorstehenden Ansprüche, **dadurch gekennzeichnet, daß** man die Reaktion unter einer Inertatmosphäre durchführt.

11. Verfahren gemäß einem der vorstehenden Ansprüche, **dadurch gekennzeichnet, daß** man die Reaktion in Abwesenheit von Lösungsmitteln durchführt.

12. Verfahren gemäß einem der vorstehenden Ansprüche, **dadurch gekennzeichnet, daß** man die Reaktion in einem Reaktor durchführt, dessen Reaktionsvolumen zu mindestens 50% durch das flüssige Reaktionsgemisch ausgefüllt ist.

13. Verfahren gemäß Anspruch 12, **dadurch gekennzeichnet, daß** die Bodensteinzahl des Reaktors mindestens 3 beträgt.

14. Verfahren gemäß Anspruch 12 oder 13, **dadurch gekennzeichnet, daß** es sich bei dem Reaktor um einen Knetreaktor handelt.

15. Alkenylbernsteinsäurederivat, erhältlich durch Umsetzung von Polyisobuten (A) mit einem zahlenmittleren Molekulargewicht $M_n$ von 10.000 bis 50.000 mit mindestens einer α,β-ungesättigte Mono- und Dicarbonsäure oder deren Derivate (B) gemäß einem der vorstehenden Verfahren.

16. Alkenylbernsteinsäurederivat gemäß Anspruch 15 mit einem Bismaleinierungsgrad von 1 bis 20% bestimmt per Verseifungszahl gemäß DIN 53401: 1988-06.

17. Verwendung der Alkenylbernsteinsäurederivat gemäß Anspruch 15 oder 16 oder deren Umsetzungprodukte mit Polyaminen, Alkoholen oder Alkanolaminen als Kraft- und Schmierstoffadditiv.

Europäisches Patentamt
European Patent Office
Office européen des brevets

# EUROPÄISCHER RECHERCHENBERICHT

Nummer der Anmeldung
EP 16 17 4503

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | EP 0 031 236 A2 (BRITISH PETROLEUM CO PLC [GB]) 1. Juli 1981 (1981-07-01)<br>* Ansprüche 1,2,4-8; Beispiele 1-4; Tabellen 1,2 *<br>* Beispiele 5-13; Tabellen 3-8 *<br>* Seite 3, Zeilen 1-30 *<br>* Seite 4, Zeilen 1-3 *<br>----- | 1-17 | INV.<br>C08F8/46<br>C08F8/10<br>C08F10/10<br>C08F8/32<br>C08F8/14<br>C08F8/48<br>C10L1/192<br>C10L1/234<br>C10M145/00<br>C10M149/00<br><br>ADD.<br>C08F110/10 |
| X | EP 0 082 601 A1 (BP CHEM INT LTD [GB]) 29. Juni 1983 (1983-06-29)<br>* Ansprüche 1-5; Tabelle 1 *<br>* Seite 1, Zeile 1 - Seite 3, Zeile 10 *<br>* Seite 3, Zeilen 14-33 *<br>* Seite 6, Zeilen 26-29 *<br>----- | 1-4,7-17 | |
| X | EP 0 251 469 A2 (SATAKE TECH RES DEV ASS [JP]; NIPPON PETROCHEMICALS CO LTD [JP]) 7. Januar 1988 (1988-01-07)<br>* Seite 26, Zeilen 16-22 *<br>* Seite 27, Zeilen 6-24 *<br>----- | 1-4,7,8, 11-13,15 | |
| | | | RECHERCHIERTE SACHGEBIETE (IPC) |
| A | WO 2008/138836 A2 (BASF SE [DE]; HANEFELD PHILLIP [DE]; WALTER HANS-MICHAEL [DE]; EICHENA) 20. November 2008 (2008-11-20)<br>* Ansprüche 1-2,5,9-12; Beispiele *<br>----- | 1-17 | C08F<br>C10M<br>C10L |
| A | WO 03/051932 A1 (BASF AG [DE]; RATH HANS PETER [DE]; LANGE ARNO [DE]; MACH HELMUT [DE]) 26. Juni 2003 (2003-06-26)<br>* Ansprüche; Beispiele *<br>----- | 1-17 | |

Der vorliegende Recherchenbericht wurde für alle Patentansprüche erstellt

2

| Recherchenort | Abschlußdatum der Recherche | Prüfer |
|---|---|---|
| München | 6. Dezember 2016 | Hollender, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 17 4503

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2016

| Im Recherchenbericht angeführtes Patentdokument | Datum der Veröffentlichung | Mitglied(er) der Patentfamilie | Datum der Veröffentlichung |
|---|---|---|---|
| EP 0031236 A2 | 01-07-1981 | CA 1146944 A | 24-05-1983 |
| | | DE 3066324 D1 | 01-03-1984 |
| | | DK 545380 A | 21-06-1981 |
| | | EP 0031236 A2 | 01-07-1981 |
| | | ES 8202583 A1 | 01-05-1982 |
| | | JP S5693798 A | 29-07-1981 |
| | | NO 803791 A | 22-06-1981 |
| EP 0082601 A1 | 29-06-1983 | DE 82601 T1 | 16-02-1984 |
| | | EP 0082601 A1 | 29-06-1983 |
| | | JP S5893706 A | 03-06-1983 |
| | | US 4472588 A | 18-09-1984 |
| EP 0251469 A2 | 07-01-1988 | AU 606596 B2 | 14-02-1991 |
| | | AU 7322887 A | 26-11-1987 |
| | | CA 1321210 C | 10-08-1993 |
| | | DE 3750103 D1 | 28-07-1994 |
| | | EP 0251469 A2 | 07-01-1988 |
| | | HK 1003791 A1 | 06-11-1998 |
| | | JP H0659410 B2 | 10-08-1994 |
| | | JP S62273053 A | 27-11-1987 |
| WO 2008138836 A2 | 20-11-2008 | KEINE | |
| WO 03051932 A1 | 26-06-2003 | AR 037869 A1 | 09-12-2004 |
| | | AT 329939 T | 15-07-2006 |
| | | AU 2002358754 A1 | 30-06-2003 |
| | | DE 10162567 A1 | 03-07-2003 |
| | | EP 1458770 A1 | 22-09-2004 |
| | | US 2005009998 A1 | 13-01-2005 |
| | | WO 03051932 A1 | 26-06-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 156310 A2
- DE 2702604
- WO 12072643 A
- US 5883196 A

### In der Beschreibung aufgeführte Nicht-Patentliteratur

- **AN-RU GUO ; XIAO-JIAN YANG ; PENG-FEI YAN ; YI-XIAN WU.** *Journal of Polymer Science, Part A: Polymer Chemistry,* 2013, vol. 51, 4200-4212